**Europäisches Patentamt**

**European Patent Office**

**Office européen des brevets**

(19)

(11) Veröffentlichungsnummer: **0 160 784**
**B1**

(12) # EUROPÄISCHE PATENTSCHRIFT

(45) Veröffentlichungstag der Patentschrift:
**24.08.88**

(51) Int. Cl.⁴: **G 02 B 5/18**

(21) Anmeldenummer: **85101400.1**

(22) Anmeldetag: **09.02.85**

(54) **Auflichtphasengitter und Verfahren zur Herstellung eines Auflichtphasengitters.**

(30) Priorität: **06.04.84 DE 3412980**

(43) Veröffentlichungstag der Anmeldung:
**13.11.85 Patentblatt 85/46**

(45) Bekanntmachung des Hinweises auf die Patenterteilung:
**24.08.88 Patentblatt 88/34**

(84) Benannte Vertragsstaaten:
**AT CH DE FR GB IT LI NL SE**

(56) Entgegenhaltungen:
**FR - A - 2 470 393**
**US - A - 3 777 633**
**US - A - 4 124 473**
**US - A - 4 426 130**

(73) Patentinhaber: **Dr. Johannes Heidenhain GmbH,**
**Nansenstrasse 17, D-8225 Traunreut (DE)**

(72) Erfinder: **Kraus, Heinz, Traunring 74e, D-8225 Traunreut**
**(DE)**

## Beschreibung

Die Erfindung betrifft ein Auflichtphasengitter gemäß dem Oberbegriff des Anspruches 1.

Ein derartiges Auflichtphasengitter wird beispielsweise bei einer lichtelektrischen Positionsmeßeinrichtung zur Messung der Relativlage zweier zueinander beweglicher Objekte als Maßverkörperung eingesetzt. Die relativ zueinander beweglichen Objekte können aus zwei Maschinenteilen einer Bearbeitungsmaschine bestehen.

Das Auflichtphasengitter dient zur Phasenverschiebung des reflektierenden Lichtes, d.h. die von benachbarten Gitterelementen ausgehenden Lichtwellen gleicher Wellenlänge besitzen in der gleichen Ausbreitungsrichtung jeweils die gleiche Phasendifferenz. Diese Phasendifferenz ergibt sich aus der optischen Weglängendifferenz zwischen zwei Lichtwellen, von denen die eine Lichtwelle von der oberen Reflexionsschicht und die andere Lichtwelle von der unteren Reflexionsschicht des mit einer bestimmten Stufentiefe versehenen Stufengitters des Auflichtphasengitters reflektiert werden.

In der Dissertation von J. Willhelm, TU Hannover, «Dreigitterschrittgeber», 1978, Seiten 19 und 20, ist angegeben, daß ein Phasengitter aus zwei Amplitudengittern mit entsprechendem Versatz zusammengesetzt ist, wobei einem Amplitudengitter noch eine Phasenschicht unterlegt ist.

Der Erfindung liegt die Aufgabe zugrunde, ein Auflichtphasengitter der genannten Gattung anzugeben, das einen stabilen Aufbau aufweist und eine einfache Herstellung ohne Justierungen erlaubt.

Diese Aufgabe wird erfindungsgemäß durch die kennzeichnenden Merkmale des Anspruches 1 gelöst.

Die mit der Erfindung erzielten Vorteile bestehen insbesondere darin, daß anstelle eines Stufengitters mit einer bestimmten Stufentiefe nur relativ dünne Reflexionsschichten strukturiert werden müssen und daß die Stufentiefe vom Strukturierungsprozess unbeeinflußt bleibt, da diese Stufentiefe nur von der Dicke der transparenten Abstandsschicht bestimmt wird. Somit entfallen beim vorgeschlagenen Auflichtphasengitter Profil- bzw. Flankenprobleme, die beim Stufengitter eines herkömmlichen Auflichtphasengitters auftreten können. Bei der Strukturierung von zwei Reflexionsschichten treten keine Justierungsprobleme bezüglich der Belichtungsmasken auf, da die zweite Reflexionsschicht mit Hilfe der ersten Reflexionsschicht strukturiert wird. Es ergibt sich somit ein stabil aufgebautes Auflichtphasengitter mit optimalen interferentiellen Eigenschaften, die auch durch Verschmutzung nicht beeinträchtigt werden, da die transparente Abstandsschicht mit der nach außen weisenden Reflexionsschicht eine quasiplane Oberfläche aufweist.

Vorteilhafte Ausbildungen der Erfindung entnimmt man den Unteransprüchen.

Ausführungsbeispiele der Erfindung werden anhand der Zeichnung näher erläutert.

Es zeigen

Figur 1a–e Verfahrensschritte zur Herstellung eines Auflichtphasengitters mit zwei strukturierten Reflexionsschichten,

Figur 2a–c Verfahrensschritte zur Herstellung eines Auflichtphasengitters mit einer strukturierten Reflexionsschicht,

Figur 3a–c Verfahrensschritte zur Herstellung eines weiteren Auflichtphasengitters mit einer strukturierten Reflexionsschicht und

Figur 4 ein Auflichtphasengitter mit einer Deckschicht im Querschnitt.

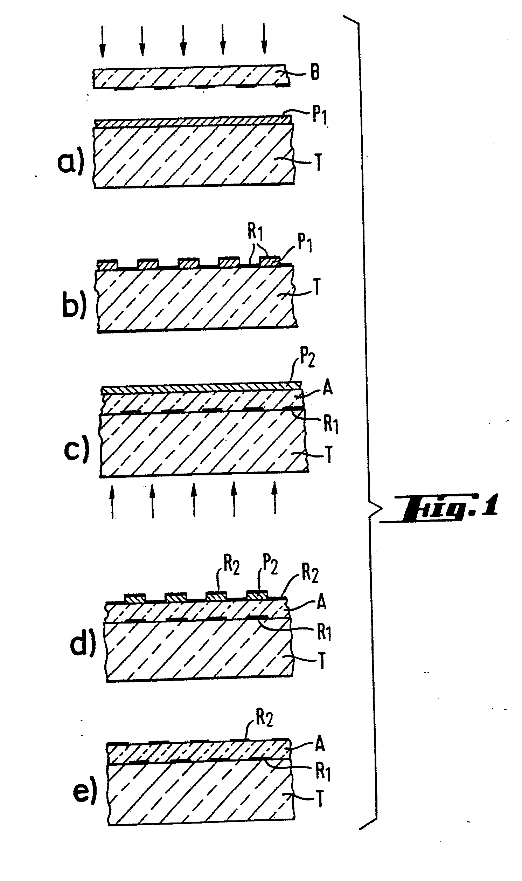

Figur 1a–e zeigen Verfahrensschritte zur Herstellung eines Auflichtphasengitters mit zwei strukturierten Reflexionsschichten $R_1$, $R_2$ als Amplitudengitter. Auf eine transparente Trägerschicht T, beispielsweise aus Glas, wird eine erste Photolackschicht $P_1$ aufgebracht und unter Verwendung einer Belichtungsmaske B strukturmäßig belichtet (Figur 1a). Auf die entwickelte erste Photolackschicht $P_1$ wird eine erste Reflexionsschicht $R_1$ aufgebracht (Figur 1b). Die verbliebene erste Photolackschicht $P_1$ wird mitsamt der darauf befindlichen ersten Reflexionsschicht $R_1$ entfernt. Auf die strukturtragende Seite der Trägerschicht T werden ganzflächig eine gleichmäßig dicke Abstandsschicht A und darauf eine zweite positive Photolackschicht $P_2$ aufgebracht, die durch die transparente Trägerschicht T und durch die verbliebene erste Reflexionsschicht $R_1$ hindurch strukturmäßig belichtet wird (Figur 1c). Nach der Entwicklung der zweiten positiven Photolackschicht $P_2$ wird auf die verbliebene zweite Photolackschicht $P_2$ und die freiliegende Oberfläche der transparenten Abstandsschicht A eine zweite Reflexionsschicht $R_2$ aufgebracht (Figur 1d). Die verbliebene zweite Photolackschicht $P_2$ wird mitsamt der darüberliegenden zweiten Reflexionsschicht $R_2$ entfernt (Figur 1e).

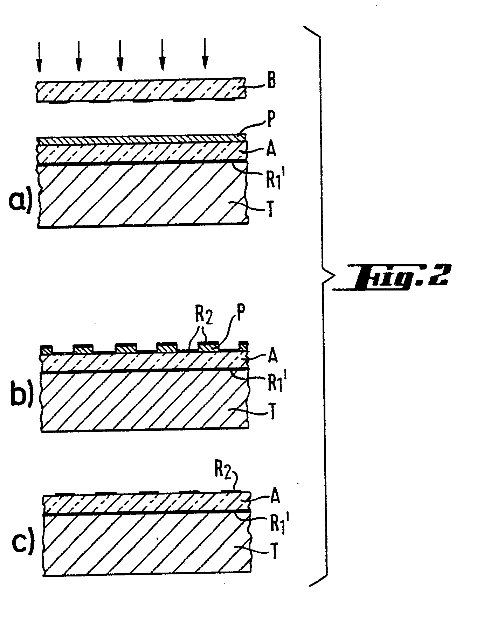

Figur 2a–c zeigen Verfahrensschritte zur Herstellung eines Auflichtphasengitters mit einer strukturierten Reflexionsschicht $R_2$ als Amplitudengitter. Auf eine transparente oder opake Trägersschicht T, beispielsweise aus Glas oder Aluminium, werden ganzflächig eine erste Reflexionsschicht $R_1'$ und darüber eine gleichmäßig dicke Abstandsschicht A aufgebracht. Auf die Abstandsschicht A wird eine Photolackschicht P aufgebracht und unter Verwendung einer Belichtungsmaske B strukturmäßig belichtet (Figur 2a). Auf die entwickelte Photolackschicht P wird eine zweite Reflexionsschicht $R_2$ aufgebracht (Figur 2b). Die verbliebene Photolackschicht P wird mitsamt der darüberliegenden zweiten Reflexionsschicht $R_2$ entfernt (Figur 2c).

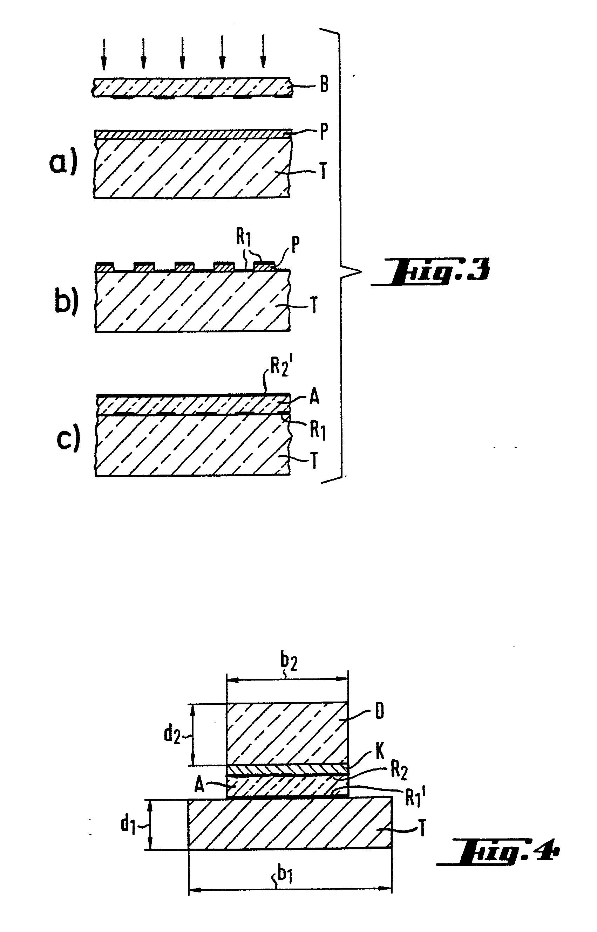

Figur 3a–c zeigen Verfahrensschritte zur Herstellung eines weiteren Auflichtphasengitters mit einer strukturierten Reflexionsschicht $R_1$ als Amplitudengitter. Auf einer transparenten Trägerschicht T, beispielsweise aus Glas, wird eine Photolackschicht P aufgebracht und unter Verwendung einer Belichtungsmaske B strukturmäßig belichtet (Figur 3a). Auf die entwickelte Photolackschicht P wird eine erste Reflexionsschicht $R_1$ aufgebracht (Figur 3b). Die verbliebene Photolackschicht P wird mitsamt der darauf befindlichen ersten Reflexionsschicht $R_1$ entfernt. Auf die strukturtragende Seite der Trägerschicht T werden ganzflächig eine gleichmäßig dicke Abstandsschicht A und darauf eine zweite Reflexionsschicht $R_2'$ aufgebracht.

Die sich über die Trägerschicht T mit konstanter Dicke erstreckende Abstandsschicht A ermöglicht einen exakten parallelen Abstand zwischen den beiden Reflexionsschichten $R_1$, $R_2$; $R_1'$, $R_2$; $R_1$, $R_2'$ und damit optimale interferentielle Eigenschaften des Auflichtphasengitters. Dieser parallele Abstand bildet die «Stufentiefe» des Auflichtphasengitters und wird je nach der gewünschten Phasenverschiebung gewählt.

Das Auflichtphasengitter gemäß Figur 1e weist zwei zueinander versetzte Reflexionsschichten $R_1$, $R_2$ als Amplitudengitter auf und ist mit einer transparenten Trägerschicht T von beiden Seiten her benutzbar. Beim Auflichtphasengitter nach Figur 2c ist nur die zweite Reflexionsschicht $R_2$ als Amplitudengitter ausgebildet, während die unstrukturierte erste Reflexionsschicht $R_1'$ sich ganzflächig über die Trägerschicht T erstreckt, so daß dieses Auflichtphasengitter nur seitens der zweiten Reflexionsschicht $R_2$ als Amplitudengitter benutzt werden kann; die Trägerschicht T kann daher transparent oder opak sein.

Beim Auflichtphasengitter nach Figur 3c ist die erste Reflexionsschicht $R_1$ als Amplitudengitter ausgebildet, während die unstrukturierte zweite Reflexionsschicht $R_2'$ sich ganzflächig über die Trägerschicht T erstreckt, so daß dieses Auflichtphasengitter nur seitens der ersten Reflexionsschicht $R_1$ als Amplitudengitter benutzt werden kann; die Trägerschicht T muß daher transparent sein.

Bei der Strukturierung der beiden Reflexionsschichten $R_1$, $R_2$ gemäß Figur 1 treten keine Justierungsprobleme bezüglich der Belichtungsmasken auf, da nur eine Belichtungsmaske B zur Strukturierung der ersten Reflexionsschicht $R_1$ erforderlich ist; die Strukturierung der zweiten Reflexionsschicht $R_2$ erfolgt mit der ersten Reflexionsschicht $R_1$, so daß unter Verwendung einer zweiten positiven Photolackschicht $P_2$ sich ein exakter Steg-Lückenversatz zwischen $R_1$, $R_2$ ergibt.

Da die außen liegende Oberfläche der transparenten Abstandsschicht A mit der zweiten Reflexionsschicht $R_1$, $R_2'$ eine quasiplane Fläche aufweist, können die optimalen interferentiellen Eigenschaften des Auflichtphasengitters nicht durch Verschmutzungen beeinträchtigt werden. Zum zusätzlichen Schutz gegen mechanische Beschädigungen kann diese Oberfläche der Abstandsschicht A mit der zweiten Reflexionsschicht $R_2$, $R_2'$ gemäß Figur 4 über eine Kittschicht K mit einer Deckschicht D abgedeckt sein.

In Figur 4 ist im Querschnitt ein Auflichtphasengitter gemäß Figur 2c mit einer transparenten Deckschicht D aus Glas gezeigt, die mit der transparenten Abstandsschicht A und der zweiten Reflexionsschicht $R_2$ über eine Kittschicht K aus optischem Kitt verbunden ist; die opake Trägerschicht T besteht aus Aluminium. Die Querschnittsabmessungen $b_1 \cdot d_1$ und $b_2 \cdot d_2$ der Trägerschicht T und der Deckschicht D sind so bemessen, daß die Trägerschicht T und die Deckschicht D die gleiche Biegesteifigkeit S aufweisen:

$$S = E_1 (b_1 \cdot d_1^3/12) = E_2 (b_2 \cdot d_2^3/12)$$

$$E = \text{Elastizitätsmodul}$$

Die gleiche Biegesteifigkeit S der Trägerschicht T und der Deckschicht D gewährleistet, daß sich die transparente Abstandsschicht A mit den beiden Reflexionsschichten $R_1'$, $R_2$ in der neutralen Ebene des gesamten Auflichtphasengitters befindet, die bei einer Verbiegung des Auflichtphasengitters keine Dehnung oder Streckung erfährt. Das Auflichtphasengitter gemäß Figur 4 gewährleistet daher bei einem Einsatz in einer Positionsmeßeinrichtung eine hohe Meßgenauigkeit.

Die transparente Abstandsschicht A besteht aus einem dielektrischen Material, beispielsweise aus $MgF_2$, SiO oder aus Glas; die beiden Reflexionsschichten $R_1$, $R_2$, $R_1'$, $R_2'$ bestehen vorzugsweise aus Chrom oder Gold.

**Patentansprüche**

1. Auflichtphasengitter, insbesondere für eine lichtelektrische Positionsmeßeinrichtung, das aus zwei beabstandeten Reflexionsschichten besteht, dadurch gekennzeichnet, daß die beiden Reflexionsschichten ($R_1$, $R_2$) zu beiden Seiten wenigstens einer transparenten Abstandsschicht (A) angeordnet sind und daß wenigstens eine Reflexionsschicht ($R_1$, $R_2$) als Amplitudengitter ausgebildet ist.

2. Phasengitter nach Anspruch 1, dadurch gekennzeichnet, daß beide Reflexionsschichten ($R_1$, $R_2$) als Amplitudengitter ausgebildet sind.

3. Phasengitter nach Anspruch 1, dadurch gekennzeichnet, daß die transparente Abstandsschicht (A) aus einem dielektrischen Material besteht.

4. Phasengitter nach Anspruch 1, dadurch gekennzeichnet, daß die erste Reflexionsschicht ($R_1$) auf einer Trägerschicht (T) aufgebracht ist und daß sich auf der zweiten Reflexionsschicht ($R_2$) wenigstens eine Deckschicht (D) befindet.

5. Phasengitter nach Anspruch 4, dadurch gekennzeichnet, daß sich zwischen der zweiten Reflexionsschicht ($R_2$) und der Deckschicht (D) eine Kittschicht (K) befindet.

6. Phasengitter nach Anspruch 4, dadurch gekennzeichnet, daß die Trägerschaft (T) und die Deckschicht (D) die gleiche Biegesteifigkeit aufweisen.

7. Phasengitter nach Anspruch 3, dadurch gekennzeichnet, daß die transparente Abstandsschicht (A) aus $MgF_2$, SiO oder Glas besteht.

8. Phasengitter nach den Ansprüchen 1 oder 2, dadurch gekennzeichnet, daß die beiden Reflexionsschichten ($R_1$, $R_2$) aus Chrom oder Gold bestehen.

9. Phasengitter nach Anspruch 5, dadurch gekennzeichnet, daß die Kittschicht (K) aus einem optischen Kitt besteht.

10. Verfahren zur Herstellung eines Auflichtphasengitters nach Anspruch 1, gekennzeichnet durch folgende Verfahrensschritte:

a) auf eine transparente Trägerschicht (T) wird eine erste Photolackschicht ($P_1$) aufgebracht, unter Verwendung einer Belichtungsmaske (B) strukturmäßig belichtet und anschließend entwickelt;

b) sodann wird die erste Reflexionsschicht ($R_1$) aufgebracht;

c) die verbliebene erste Photolackschicht ($P_1$) wird mitsamt der darüberliegenden ersten Reflexionsschicht ($R_1$) entfernt;

d) auf die strukturtragende Seite der Trägerschicht (T) wird ganzflächig die gleichmäßig dicke Abstandsschicht (A) aufgebracht;

e) auf die Abstandsschicht (A) wird eine zweite positive Photolackschicht (P₂) augebracht, seitens der Trägerschicht (T) mittels der verbliebenen ersten Reflexionsschicht (R₁) strukturmäßig belichtet und anschließend entwickelt;

f) sodann wird die zweite Reflexionsschicht (R₂) aufgebracht;

g) die verbliebene zweite Photolackschicht (P₂) wird mitsamt der darüberliegenden zweiten Reflexionsschicht (R₂) entfernt.

11. Verfahren zur Herstellung eines Auflichtphasengitters nach Anspruch 1, gekennzeichnet durch folgende Verfahrensschritte:

a) auf eine Trägerschicht (T) wird die erste Reflexionsschicht R₁') aufgebracht;

b) auf die erste Reflexionsschicht (R₁') wird ganzflächig die gleichmäßig dicke Abstandsschicht (A) aufgebracht;

c) auf die Abstandsschicht (A) wird eine Photolackschicht (P) aufgebracht, unter Verwendung einer Belichtungsmaske (B) strukturmäßig belichtet und anschließend entwickelt;

d) sodann wird die zweite Reflexionsschicht (R₂) aufgebracht;

e) die verbliebene Photolackschicht (P) wird mitsamt der darüberliegenden zweiten Reflexionsschicht (R₂) entfernt.

12. Verfahren zur Herstellung eines Auflichtphasengitters nach Anspruch 1, gekennzeichnet durch folgende Verfahrensschritte:

a) auf eine transparente Trägerschicht (T) wird eine Photolackschicht (P) aufgebracht, unter Verwendung einer Belichtungsmaske (B) strukturmäßig belichtet und anschließend entwickelt;

b) sodann wird die erste Reflexionsschicht (R₁) aufgebracht;

c) die verbliebene Photolackschicht (P) wird mitsamt der darüberliegenden Reflexionsschicht (R₁) entfernt;

d) auf die strukturtragende Seite der Trägerschicht (T) wird ganzflächig die gleichäßig dicke Abstandsschicht (A) aufgebracht;

e) auf die Abstandsschicht (A) wird die zweite Reflexionsschicht (R₂') aufgebracht.

**Claims**

1. Incident light phase grating, especially for a photoelectric position measuring device, which consists of two spaced reflective layers, characterized in that the two reflective layers (R₁, R₂) are arranged on the two sides of at least one transparent spacing layer (A) and in that at least one reflective layer (R₁, R₂) is formed as an amplitude grating.

2. Phase grating according to claim 1, characterized in that both reflective layers (R₁, R₂) are formed as amplitude gratings.

3. Phase grating according to claim 1, characterized in that the transparent spacing layer (A) consists of a dielectric material.

4. Phase grating according to claim 1, characterized in that the first reflective layer (R₁) is applied to a support layer (T) and in that there is at least one cover layer (D) on the second reflective layer (R₂).

5. Phase grating according to claim 4, characterized in that there is a cement layer (K) between the second reflective layer (R₂) and the cover layer (D).

6. Phase grating according to claim 4, characterized in that the support layer (T) and the cover layer (D) have the same bending stiffness.

7. Phase grating according to claim 3, characterized in that the transparent spacing layer (A) consists of MgF₂, SiO or glass.

8. Phase grating according to claim 1 or 2, characterized in that the two reflective (R₁, R₂) consist of gold or chromium.

9. Phase grating according to claim 5, characterized in that the cement layer (K) consists of an optical cement.

10. Method of making an incident light phase grating according to claim 1, characterized by the following method steps:

a) a first photosensitive layer (P₁) is applied to a transparent support layer (T), is illuminated with structured light using a mask (B) and is then developed;

b) the first reflective layer (R₁) is then applied;

c) the remaining first photosensitive layer (P₁) is removed with the first reflective layer (R₁) lying thereon;

d) on the structure-bearing side of the support layer (T) is applied overall the spacing layer (A) of uniform thickness;

e) a second positive photosensitive layer (P₂) is applied to the spacing layer (A), on the side of the support layer (T), is illuminated with structured light by means of the remaining first reflective layer (R₁) and is then developed;

f) the second reflective layer (R₂) is then applied;

g) the remaining second photosensitive layer (P₂) is removed with the second reflective layer (R₂) lying thereon.

11. Method of making an incident light phase grating according to claim 1, characterized by the following method steps:

a) the first reflective layer (R₁') is applied to a support layer (T);

b) on the first reflective layer (R₁') is applied overall the spacing layer (A) of uniform thickness;

c) on the spacing layer (A) is applied a photosensitive layer (P), which is illuminated with structured light using a mask (B) and is then developed;

d) the second reflective layer (R₂) is then applied;

e) the remaining photosensitive layer (P) is removed with the second reflective layer (R₂) lying thereon.

12. Method of making an incident light phase grating according to claim 1, characterized by the following method steps:

a) a fotosensitive layer (P) is applied to a transparent support layer (T), is illuminated with structured light using a mask (B) and is then developed;

b) the first reflective layer (R₁) is then applied;

c) the remaining photosensitive layer (P) is removed with the reflective layer (R₁) lying thereon

d) on the structure-bearing side of the support layer (T) there is applied overall the spacing layer (A) of uniform thickness;

e) the second reflective layer (R₂') is applied on the spacing layer (A).

## Revendications

1. Réseau de phase par réflexion destiné en particulier à un dispositif photoélectrique de mesure de position et composé de deux couches réflectrices espacées, caractérisé en ce que les deux couches réflectrices ($R_1$, $R_2$) sont disposées de part et d'autre d'au moins une couche transparente d'espacement (A) et en ce qu'au moins une couche réflectrice ($R_1$, $R_2$) est réalisée sous forme de réseau d'amplitude.

2. Réseau de phase selon la revendication 1, caractérisé en ce que les deux couches réflectrices ($R_1$, $R_2$) sont réalisées sous forme de réseau d'amplitude.

3. Réseau de phase selon la revendication 1, caractérisé en ce que la couche transparente d'espacement (A) est constituée d'un matériau diélectrique.

4. Réseau de phase selon la revendication 1, caractérisé en ce que la première couche réflectrice ($R_1$) est déposée sur une couche support (T) et en ce qu'au moins une couche de recouvrement (D) se trouve sur la deuxième couche réflectrice ($R_2$).

5. Reséau de phase selon la revendication 4, caractérisé en ce qu'une couche de ciment (K) se trouve entre la deuxième couche réflectrice ($R_2$) et la couche de recouvrement (D).

6. Réseau de phase selon la revendication 4, caractérisé en ce que la couche support (T) et la couche recouvrement (D) présentent la même rigidité en flexion.

7. Réseau de phase selon la revendication 3, caractérisé en ce que la couche transparente d'espacement (A) est en MgF₂, SiO ou en verre.

8. Réseau de phase selon la revendication 1 ou 2, caractérisé en ce que les deux couches réflectrices ($R_1$, $R_2$) sont en chrome ou en or.

9. Réseau de phase selon la revendication 5, caractérisé en ce que la couche de ciment (K) est constituée de ciment d'optique.

10. Procédé de fabrication d'un réseau de phase par réflexion selon la revendication 1, caractérisé par les étapes opératoires suivantes:

a) une première couche de vernis photosensible ($P_1$) est déposée sur une couche support transparente (T), est insolée conformément à la structure en utilisant un masque d'insolation (B) puis est développée;

b) la première couche réflectrice ($R_1$) est ensuite déposée;

c) la première couche de vernis photosensible restante ($P_1$) est enlevée avec la première couche réflectrice ($R_1$) la recouvrant;

d) la couche d'espacement (A) d'épaisseur régulière est déposée sur toute la surface du côté de la couche support (T) portant la structure;

e) une deuxième couche de vernis photosensible ($P_2$) est déposée sur la couche d'espacement (A), est insolée conformément à la structure du côté de la couche support (T) à l'aide de la première couche réflectrice restante ($R_1$), puis est développé;

f) la deuxième couche réflectrice ($R_2$) est ensuite déposée;

g) la deuxième couche restante de vernis photosensible ($P_2$) est enlevée avec la deuxième couche réflectrice ($R_2$) la recouvrant.

11. Procédé de fabrication d'un réseau de phase par réflexion selon la revendication 1, caractérisé par les étapes opératoires suivantes:

a) la première couche réflectrice ($R_1'$) est déposée sur une couche support (T);

b) la couche d'espacement (A) d'une épaisseur régulière est déposée sur toute la surface de la première couche réflectrice ($R_1'$);

c) une couche de vernis photosensible (P) est déposée sur la couche d'espacement (A), est insolée conformément à la structure en utilisant un masque d'isolation (B) puis est dévelopée;

d) la deuxième couche réflectrice ($R_2$) est ensuite déposée;

e) la couche restante de vernis photosensible (P) est enlevée avec la deuxième couche réflectrice ($R_2$) la recouvrant.

12. Procédé de fabrication d'un réseau de phase par réflexion selon la revendication 1, caractérisé par les étapes opératoires suivantes:

a) une couche de vernis photosensible (P) est déposée sur une couche support transparente (T), est insolée conformément à la structure en utilisant un masque d'insolation (B) puis est développée;

b) la première couche réflectrice ($R_1$) est ensuite déposée;

c) la couche restante de vernis photosensible (P) est enlevée avec la couche réflectrice ($R_1$) la recouvrant;

d) la couche d'espacement (A) d'une épaisseur régulière est déposée sur toute la surface du côté de la couche support (T) portant la structure;

e) la deuxième couche réflectrice ($R_2'$) est déposée sur la couche d'espacement (A).

**Fig.1**

Fig.2

a)

b)

c)

Fig.3

Fig.4